# EUROPEAN PATENT APPLICATION

(11) **EP 1 260 324 A2**
(43) Date of publication of application: **27.11.2002**
(21) Application number: 02011513.5
(22) Date of filing: 22.05.2002
(51) Int. Cl.: B25J 9/16

(54) **Method and system for providing service by robot**

(30) Priority: 25.05.2001 JP 2001157400
(71) Applicant: Mitsubishi Heavy Industries, Ltd., Tokyo (JP)
(72) Inventor: Onishi, Ken, Mitsubishi Heavy Ind., Ltd., Hyogo-ku, Kobe, Hyogo-ken (JP); Nagashima, Tadashi, Mitsubishi Heavy Ind., Ltd., Hyogo-ku, Kobe, Hyogo-ken (JP); Otsubo, Kiichiro, Mitsubishi Heavy Ind., Ltd., Hyogo-ku, Kobe, Hyogo-ken (JP); Kodama, Hiroyoshi, Mitsubishi Heavy Ind., Ltd., Hyogo-ku, Kobe, Hyogo-ken (JP); Hiura, Ryota, Mitsubishi Heavy Ind., Ltd., Takasago, Hyogo 676-8686 (JP); Kurioka, Takashi, Mitsubishi Heavy Ind., Ltd., Chiyoda-ku, Tokyo (JP); Suzuki, Junji, Mitsubishi Heavy Ind., Ltd., Chiyoda-ku, Tokyo (JP); Aso, Shinya, Mitsubishi Heavy Ind., Ltd., Hyogo-ku, Kobe, Hyogo-ken (JP)
(74) Representative: HOFFMANN - EITLE

(57) **Abstract**

A system includes an operation input section (5) which transmits operation request information of a service requested to a robot (4) via the Internet (1), and a remote control section (11) which receives the operation request information transmitted from the operation input section (5) via the Internet (1), returns operation information for operating the robot (4) to the user system (2) via the Internet (1) on the basis of the received operation request information, and remotely controls the robot (4) on the basis of the operation information.

## Description

The present invention relates to a robot service providing a method and system which provide services requested on site by remotely controlling robots on the basis of requests from the sites equipped with the robots.

A method of providing services by robots is mainly applied to repetitive unskilled work on a production line in an automotive factory or electric device factory. Each robot applied to such a factory line is designed to perform only a predetermined operation. Therefore, the cost performance of a program for controlling operation is good.

Recently, as an application of the use of robots, robots designed to perform household chores, nursing cares, and the like have been studied. If such operation is to be done by a robot, the operation of the robot becomes nonroutine. This operation differs from the above repetitive unskilled work. It is therefore difficult to create a program for controlling such operation.

In order to solve the difficulty in creating such a program, studies have been made to develop a robot capable of autonomously operating by using sensing techniques. It is, however, difficult to manufacture a practical robot unless the content of operation or environment can be specified.

Demand for practical use of robots for supporting daily life such as household chores and nursing care has recently increased. As the burden on housewives increases with trends toward nuclear family and few children, or as demand for nursing care increases in this aging society, a very large number of people want to introduce robots. Such demand has arisen from ordinary households as well as service providers. Obviously, general users desire the provision of robots that can be used at costs low enough to prevent household economy from being affected.

As described above, in providing services using conventional robots, the robots are mainly applied to repetitive routine operation in consideration of the cost performance with respect to the expense spent to develop a program for controlling the operation of the robots. On the other hand, for nonroutine operation such as household chores and nursing care, such a program has hardly been put into practice because of the difficulty in developing it. Assume that such a program is developed. Obviously, in this case, it takes an enormous program development cost, and the cost is passed along to users including ordinary households.

According to an aspect of the invention, operation information corresponding to operation request information is returned to a client on the basis of the operation request information for a robot which is transmitted from the client which requests a robot service via a communication network, and the robot is operated on the basis of this operation information.

The client corresponds to a company, home, or the like. The client transmits operation request information from a local transmitter to a service provider via a communication network. This communication network is preferably a public line such as the Internet, but may be a dedicated line such as a LAN.

The operation request information transmitted from the client is received by the service provider. The service provider creates operation information for operating the robot on the basis of the received operation request information. On the basis of this operation information, the robot equipped in the client is remotely controlled via the communication network.

The service provider lends this robot to the client for free of charge or with payment in advance. This robot can be manually operated by the client as well as being remotely controlled.

The service provider remotely controls the robot on the basis of the operation request from the client, and charges the client in accordance with the contents of operation, e.g., the operation amount and difficulty of the operation.

The number of service providers is not limited to one, and a plurality of service providers may exist in accordance with the contents of services. The client can select a desired service provider in accordance with the content or fee of a service. By transmitting operation request information to this selected service provider, the robot is remotely controlled by the desired service provider.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a conceptual view showing an example of the arrangement of a robot service providing system to which a robot service providing method according to an embodiment of the present invention is applied; and
FIG. 2 is a flowchart showing an example of the operation of the robot service providing system to which the robot service providing method according to the embodiment of the present invention is applied.

An embodiment of the present invention will be described below with reference to the views of the accompanying drawing.

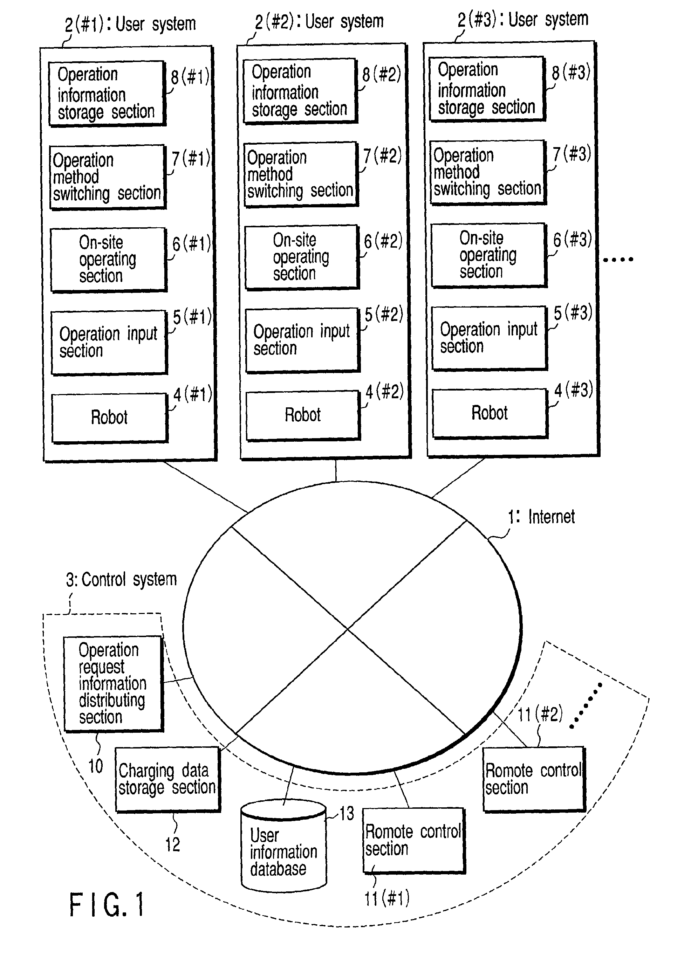

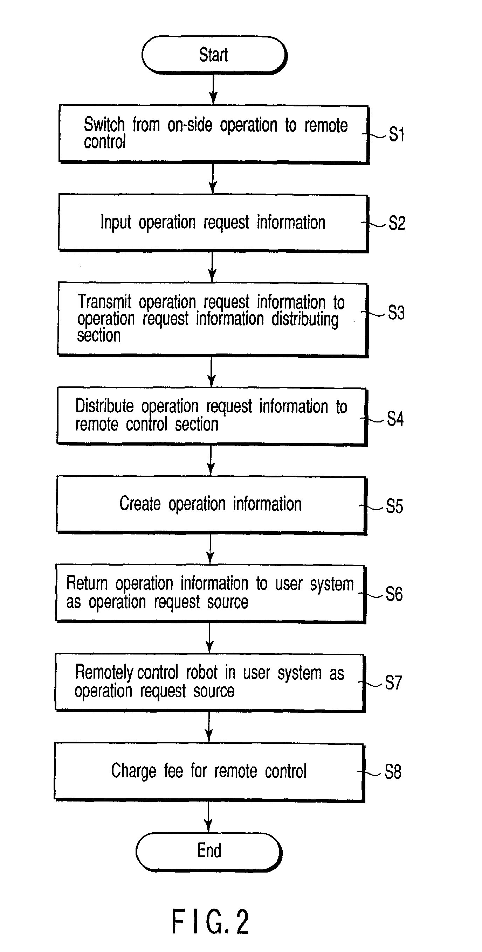

The embodiment of the present invention will be described with reference to FIGS. 1 and 2.

FIG. 1 is a conceptual illustration showing an example of a robot service providing system to which a robot service providing method according to the embodiment of the present invention is applied.

The robot service providing system to which the robot service providing method according to the embodiment of the present invention is applied is comprised of a plurality of user systems 2 (#1, #2, #3,...), which are connected to each other via the Internet 1, and a control system 3.

The user systems 2 (#1, #2, #3,...) respectively include robots 4 (#1, #2, #3,...). In addition, each user system 2 includes an operation input section 5, on-site operating section 6, operation method switching section 7, and operation information storage section 8 which are used to control a corresponding robot 4.

The operation input section 5 receives operation request information input from a user, which is about the service requested to the robot 4 equipped in the local user system 2. Upon reception of operation request information from the user, the operation input section 5 transmits the input operation request information to the control system 3 side via the Internet 1. Note that the robot 4 is equipped with software for controlling the autonomous operation of the robot 4. By inputting the operation request information input by the user in this software, the robot 4 can autonomously operate.

The on-site operating section 6 has a control function for operating the robot 4 on site. This makes it possible to control the operation of the robot 4 step by step and allow manual operation on site. In addition, the operation information returned from a remote control section 11 is stored in the operation information storage section 8, and the robot 4 is operated on the basis of the stored operation information, thereby allowing the robot 4 to continuously operate.

The operation method switching section 7 switches operation methods for the robot 4. More specifically, the operation method switching section 7 switches the operation method for the robot 4 that is operated on site by the on-site operating section 6 from the on-site operation method to the remote control method executed by the remote control section 11. In contrast to this, the operation method switching section 7 switches the operation method for the robot 4 that is remotely controlled by the remote control section 11 from the remote control method to the on-site operation method executed by the on-site operating section 6. For this switching operation, a switch (not shown) for switching the operation methods may be prepared. The operation methods may be switched by pressing this switch. Alternatively, a speech recognition means (not shown) may be prepared to switch the operation methods on the basis of the speech recognized by this speech recognition means.

The operation information storage section 8 stores the operation information transmitted from the remote control section 11 and outputs the stored operation information to the on-site operating section 6 in accordance with a request from the on-site operating section 6.

The control system 3 includes an operation request information distributing section 10, a plurality of remote control sections 11 (#1, #2,...), charging data storage section 12, and user information database 13.

The operation request information distributing section 10 receives the operation request information transmitted from the operation input section 5 of each of the user systems 2 (#1, #2, #3,...). The operation request information distributing section 10 then distributes the received operation information to one of the plurality of remote control sections 11 (#1, #2,...). For example, the operation request information is distributed to the remote control section 11 that is not operating at the time of the reception of the operation request information. In addition, on the basis of the contents of the received operation request information, this information is distributed to the remote control section 11 of which an operator suitable for the operation takes charge.

An operator inputs operation information for operating the robot 4 by using a corresponding remote control section 11 (#1, #2,...) on the basis of the operation request information distributed from the operation request information distributing section 10. The operation information input by the operator is returned to the user system 2 side as the operation request source via the Internet 1. The robot 4 equipped in the user system 2 as the operation request source is remotely controlled on the basis of the returned operation information. Note that such operation information is created by the operator by himself/herself by referring to user-specific information pre-stored in the user information database 13, as needed, or created in accordance with a program installed in advance. If, for example, the contents of distributed operation request information are about a house cleaning service, the remote control section 11 creates operation information for efficient cleaning on the basis of the residential floor plan information of the user stored in the user information database 13 in advance.

Each remote control section 11 (#1, #2,...) has an inquiry function of making an inquiry about additional information to the user system 2 as a transmission source of operation request information. The remote control section 11 makes an inquiry about required additional information to the user system 2 side by using this inquiry function. The remote control section 11 then creates appropriate operation information by reflecting the information transmitted in accordance with the inquiry therein.

The charging data storage section 12 charges the user an operation fee on the basis of the operation time of the robot 4 controlled by the remote control section 11, and stores charging data which is information about charging for each user system 2 (#1, #2, #3,...). Note that charging is not limited to that performed on the basis of the operation time of the robot 4 and may be arbitrarily determined on the control system 3 side on the basis of the contents and difficulty of operation.

The user information database 13 is a database storing the locations where the respective user systems 2 are installed, i.e., information about environments in which users receive services by using the robots 4, and log data of operation request information transmitted from each user system 2. These data stored in the user information database 13 can be displayed by each remote control section 11.

Note that in the robot service providing system to which the robot service providing method according to the embodiment of the present invention having the above arrangement is applied, the Internet 1 is exemplified as a communication network for connecting each user system 2 to the control system 3. This communication network is not limited to the Internet 1, and may be formed by a LAN such as Ethernet or a WAN in which a plurality of LANs are connected to each other via public lines and dedicated lines. A LAN is constituted by many subnets, which are connected via routers as needed. A WAN has a firewall or the like, as needed, but an illustration and detailed description thereof will be omitted.

The operation of the robot service providing system having the above arrangement to which the robot service providing method according to the embodiment of the present invention is applied will be described next with reference to the flowchart of FIG. 2.

In the robot service providing system to which the robot service providing method according to the embodiment of the present invention is applied, the robot 4 in each user system 2 is controlled by both on-site control by the on-site operating section 6 and remote control by the remote control section 11.

When on-site control is performed by the on-site operating section 6, the operation based on a program installed in the robot 4 is controlled or manual operation is performed. When the operation information transmitted from the remote control section 11 is stored in the operation information storage section 8, the stored operation information is read as needed, and the operation of the robot is controlled in accordance with the read operation information.

Assume that the operation method for the robot 4 that is being subjected to on-site control by the on-site operating section 6 is switched to the remote control, and the robot 4 is made to perform a complicated service based on nonroutine operation such as household chores or nursing cares on the basis of the operation performed by the remote control section 11. This operation will be described below.

First of all, in this case, the operation method switching section 7 switches the operation method for the robot 4 from on-site operation to remote control (S1). The operation methods can be switched by pressing the switch (not shown) for switching the operation methods. Alternatively, the operation methods may be switched on the basis of the speech recognized by the speech recognition means (not shown). For example, the operation methods may be switched by recognizing the speech "Will you clean the house?" as an operation request.

When the operation method is switched from on-site operation to remote control, the operation input section 5 can receive operation request information about the service requested to the robot 4 which is input from the user. When the user inputs operation request information (S2), the input operation request information is transmitted to the operation request information distributing section 10 of the control system 3 via the Internet 1 (S3).

A menu of operations that can be provided on the control system 3 side is displayed on the operation input section 5. The user inputs operation request information by designating a desired service from the displayed menu and further designating the specific content of the service which is displayed in a hierarchical structure. If, for example, the user wants the robot 4 to clean the house, he/she inputs operation request information by designating "clean" from the menu and further designating "place to be cleaned", "cleaning method", and the like step by step in accordance with instructions displayed in a hierarchical structure.

When the operation request information transmitted from the operation input section 5 of each of the user systems 2 (#1, #2, #3,...) is transmitted to the operation request information distributing section 10, the transmitted operation request information is distributed to one of the remote control sections 11 (#1, #2,...) in the operation request information distributing section 10 (S4). The operation request information is distributed to the remote control section 11 which is not operating at the time the operation request information distributing section 10 receives the operation request information. Alternatively, the operation request information is distributed to the remote control section 11 of which an operator suitable for the operation takes charge, on the basis of the content of the received operation request information.

When the operation request information is distributed from the operation request information distributing section 10 to the remote control section 11, operation information for operating the robot 4 is created by the operator or in accordance with a preinstalled program (S5) and input to the remote control section 11. The operation information input to the remote control section 11 is returned to the user system 2 side as the operation request source via the Internet 1 (S6). When the robot 4 equipped in the user system 2 as the operation request source is remotely controlled on the basis of the returned operation information, the service requested by the user is provided (S7).

Note that this operation information is created by referring to user-specific information stored in the user information database 13 in advance, as needed. If, for example, the content of the distributed operation request information is about a house cleaning service, the remote control section 11 creates operation information for efficient cleaning on the basis of the floor plan information of the user's house stored in the user information database 13 in advance.

In step S6, the operation information returned to the user system 2 side is stored in the operation information storage section 8 of the user system 2. The operation information stored in the operation information storage section 8 in this manner is obtained by the on-site operating section 6 in accordance with a request from the on-site operating section 6 and supplied for on-site operation performed by the on-site operating section 6.

In addition, an operation fee is charged on the basis of the operation time of remote control performed in step S7, and charging data as information about charging is stored in the charging data storage section 12 for each of the user systems 2 (#1, #2, #3,...) (S8). Note that charging is not limited to that based on the operation time of the robot 4 and may be arbitrarily determined on the control system 3 side on the basis of the content or difficulty of operation.

As described above, in the robot service providing system to which the robot service providing method according to the embodiment of the present invention is applied, with the above function, when a request to perform nonroutine operation such as household chores or nursing care is given to the robot 4 which usually performs routine operation on site, a request to perform remote control can be given to the control system 3 side via a communication network such as the Internet 1.

Upon reception of the request, the remote control section 11 of the control system 3 creates operation information for operating the robot 4 by referring to the information about each user stored in the user information database 13 in advance, as needed, on the basis of the operation request information. The remote control section 11 then returns the created operation information to the user system 2 side via the Internet 1. The robot 4 equipped in the user system 2 which is the operation request source then can be remotely controlled on the basis of the returned operation information.

As described above, in the robot service providing system to which the robot service providing method according to the embodiment of the present invention is applied, when nonroutine operation such as household chores or nursing care is requested, the remote control section 11 creates operation information corresponding to the content of the request. The robot 4 can then be remotely controlled on the basis of the content of the created operation information. There is therefore no need to develop a program for executing the operation. Consequently, each user need not have any program for creating operation information, user information, and the like, which can be concentrated on the control system 3 side.

As described above, there is no need to develop any program for controlling nonroutine tasks. In addition, necessary facilities can be concentrated on the control system 3. Owing to these effects, the user can receive a desired service at a feasible cost by the operation of the robot 4 remotely controlled by the remote control section 11 without operating the robot 4 by himself/herself.

Even if the above remote control is to be done, the user's attachment to the robot 4 can be enhanced by making some contrivance to eliminate the feeling of remote control. Even if, for example, the operator of the remote control section 11 directly makes an inquiry to the user, an operator's voice is not directly output from the robot 4. Instead, the robot 4 is equipped with a means for making an utterance on the basis of an operator's voice. This makes the user feel without sense of remote control that the robot 4 is autonomously providing a service. This makes it possible to enhance the user's attachment to the robot. This also increases the frequency of use of the robot 4.

The control system 3 can accumulate operation fees in the charging data storage section 12 for each user. This makes it possible to develop, for example, a business in which the robot 4 is provided in advance for each user free of charge, and the cost of the provided robot 4 is withdrawn by charged fees.

Note that this embodiment has been described by exemplifying the case where only one control system 3 is used. However, the number of control systems 3 is not limited to one, and a plurality of such systems may be used. Assume that a plurality of control systems 3 are present, and the respective control systems 3 provide different services or specialized services. In this case, a provider business of providing operation information about the robot 4 can be developed.

In this case, merits can be produced on the user side as well by allowing users to select desired providers in accordance with the contents of services provided by the respective providers, fees, and the like.

As has been described above, according to the present invention, even if nonroutine operation such as household chores or nursing care is to be performed, a robot can be made to perform desired operation by remotely controlling the robot without developing any expensive program.

As a consequence, the users can receive services such as household chores and nursing care performed by robots without paying high fees. On the service provider side, since robots can be remotely controlled, there is no need to dispatch persons in charge to sites. In addition, since the robots 4 can be intensively operated on the control system 3 side, operation know-how can be accumulated.

## Claims

1. A method of providing service by operating a robot (4), **characterized by** comprising:
a receiving step of receiving operation request information of the robot (4) from a client (2) which requests service performed by the robot (4), which is transmitted via a communication network (1); and
an operating step of returning operation information corresponding to the operation request information received in the receiving step to the client (2), and operating the robot (4) on the basis of the operation information.

2. A method according to claim 1, **characterized in that**
the communication network (1) comprises Internet (1), and
the operating step comprises a substep of returning the operation information to the client (2) via the Internet (1).

3. A method according to claim 1 or 2, **characterized by** further comprising a charging step of charging an operation fee to the client (2) on the basis of the operation information.

4. A method according to claim 3, **characterized by** further comprising:
a supplying step of supplying the robot (4) to the client (2) for free; and
a charge withdrawing step of withdrawing the operation fee charged in the charging step and committing the operation fee to a cost of the robot (4) supplied to the client (2) in the supplying step.

5. A method of providing service by operating a robot (4), **characterized by** comprising:
a selecting step of causing a client (2) which requests service performed by the robot (4) to select a robot operation provider (11) from a plurality of robot operation providers (11) on the basis of a content of service requested to the robot (4);
a transmitting step of transmitting operation request information corresponding to the service to the robot operation provider (11) selected in the selecting step via Internet (1);
a receiving step of receiving operation information returned from the robot operation provider (11) via the Internet (1) on the basis of the operation request information transmitted in the transmitting step; and
a service accepting step of accepting the service performed by the robot (4) operated on the basis of the operation information received in the receiving step.

6. A method of accepting service from an operated robot (4), **characterized by** comprising:
a transmitting step of transmitting operation request information corresponding to a service requested to the robot (4) to a robot operation provider (11);
a receiving step of receiving operation information returned from the robot operation provider (11) on the basis of the operation request information transmitted in the transmitting step; and
a service accepting step of accepting the service from the robot (4) operated on the basis of the operation information received in the receiving step.

7. A method according to claim 6, **characterized in that**
the transmitting step comprises a substep of transmitting the operation request information corresponding to the service requested to the robot (4) to the robot operation provider (11) via Internet (1), and
the receiving step comprises a substep of receiving the operation information transmitted from the robot operation provider (11) on the basis of the operation request information transmitted in the transmitting step via Internet (1).

8. A method of accepting service from an operated robot (4), **characterized by** comprising:
a selecting step of selecting a robot operation provider (11) from a plurality of robot operation providers (11) on the basis of a content of a service requested to the robot (4);
a transmitting step of transmitting operation request information corresponding to the service to the robot operation provider (11) selected in the selecting step;
a receiving step of receiving operation information returned from the robot operation provider (11) on the basis of the operation request information transmitted in the transmitting step; and
a service accepting step of accepting the service from the robot (4) operated on the basis of the operation information received in the receiving step.

9. A system for providing service by operating a robot (4), **characterized by** comprising:
service requesting means (2), having a robot (4) connected via a communication network (1), for transmitting operation request information of a service request to the robot (4) via the communication network (1); and
remote control means (11) for receiving the operation request information transmitted from said service requesting means (2) via the communication network (1), returning operation information for operating the robot (4) to said service requesting means (2) via the communication network (1), and remotely controlling the robot (4) on the basis of the operation information.

10. A system for providing service by operating a robot (4), **characterized by** comprising:
a plurality of service requesting means (2), respectively having robots (4) connected via a communication network (1), for transmitting pieces of operation request information of services requested to said respective robots (4) via the communication network (1);
a plurality of remote control means (11) for returning pieces of operation information for operating the robots (4) to said service requesting means (2) as transmission sources via the communication network (1) on the basis of the pieces of operation request information, and remotely controlling the robots (4) equipped in said service requesting means (2) as return destinations on the basis of the returned pieces of operation information; and
operation request distributing means (10) for receiving the pieces of operation request information transmitted from said plurality of service requesting means (2) via the communication network (1), and distributing the received pieces of operation request information on the basis of a content of the operation request information to any of the remote control means (11).

11. A system according to claim 10, **characterized by** further comprising charging data storage means (12) for storing charging data for charging said service requesting means (2) equipped with the controlled robot (4) on the basis of operation of the robot (4) in association with said service request means (2).

12. A system according to any one of claims 9 to 11, **characterized in that**
said service requesting means (2) comprises:
on-site operating means (6) for operating the robot (4) on site; and
operation method switching means (7) for switching an operation method for the robot (4) from on-site operation by said on-site operating means (6) to remote control by said remote control means (11) or from remote control by said remote control means (11) to on-site operation by said on-site operating means (6).

13. A system according to claim 12, **characterized in that** said operation method switching means (7) receives speech and recognizes the received speech, and switches operation methods for the robot (4) on the basis of the recognized speech.

14. A system according to claim 12 or 13, **characterized in that** said service requesting means (2) comprises operation information storage means (8) for storing operation information returned from said remote control means (11), and said on-site operating means (6) operates the robot (4) on site on the basis of the operation information stored in said operation information storage means (8).

15. A system according to any one of claims 9 to 14, **characterized by** further comprising:
user information storage means (13) for storing one or both of information about an environment in which said service requesting means (2) is used and the log of the operation request information; and
display means for displaying information stored in said user information storage means (13).

16. A system according to any one of claims 9 to 15, **characterized in that** said remote control means (11) further comprises inquiring means for inquiring of said service requesting means (2) about the operation request information transmitted from said service requesting means (2).

17. A system according to any one of claims 9 to 16, **characterized in that** a software package for controlling autonomous operation of the robot (4) is transmitted from a service provider (3) to a client (2) via the communication network (1) to download the software in the robot (4) on the client (2), and the client (2) inputs the operation request information to the software which is installed in the robot (4).

18. A system according to claim 17, **characterized in that** the robot (4) is operated by at least one of remote control by said remote control means (11) and the autonomous operation.
